# EUROPEAN PATENT APPLICATION

(11) **EP 2 458 512 A1**
(43) Date of publication of application: **30.05.2012**
(21) Application number: 10192927.1
(22) Date of filing: 29.11.2010
(51) Int. Cl.: G06F 17/30

(54) **Mobile data storage**

(71) Applicant: Deutsche Telekom AG, 53113 Bonn (DE); Magyar Telekom Plc, 1013 Budapest (HU)
(72) Inventor: Sommerwerk, Andreas, 10119 Berlin (DE); Dul, David, 5000 Szolnok (HU); Korsos, Milan, 5000 Szolnok (HU); Nemes, Attila, 1151 Budapest (HU); Winkler, Szolt, 1112 Budapest (HU); Bircsak, Eszter, 1181 Budapest (HU)
(74) Representative: Vossius & Partner

(57) **Abstract**

A mobile data storage device (4) comprises a processor (14), an interface unit (11, 12, 16), a digital memory (13), a position detecting unit (17) for detecting a position of the mobile data storage device (4) and a data management module (8) for managing data (7) of the digital memory (13). In particular, the data management module (8) is arranged to assign an attribute comprising the current position detected by the position detecting unit (17) to the data (7) when storing the data in the digital memory (13). According to the invention, finding and managing data (7) stored by the mobile data storage device (4) can be improved by taking into account the position within the attribute assigned to the data (7). Thus, by adding the additional attributes or tags comprising the geographical position to the data (7) or to every file that is created, saved or manipulated by the mobile data storage device (4) the data (7) can be conveniently managed and found.

## Description

### Technical Field

The present invention relates to a mobile data storage device according to the preamble of independent claim 1 and more particularly to a corresponding data management service. Such data storage devices comprising a processor, an interface unit, a digital memory, a position detecting unit for detecting a position of the mobile data storage device and a data management module for managing data of the digital memory can be used for mobile data storage such as saving and moving data by means of a mobile device, e.g., a USB stick or the like.

### Background Art

The use of digital data manipulation devices like computers, laptops, music and video playing devices, mobile telephones, photographic recording devices, etc. is closely connected to various possibilities of sharing and moving digital data such as, e.g., digital photos, movies, text, etc. from one device to another. Historically, there are many different technical possibilities to achieve data storage. Examples thereof are external hard disk drives, floppy disks, compact disks (CD), digital versatile disks (DVD), magnetic tapes and more recently flash memory devices. The main purpose of all these solutions is saving digital data and moving it securely from one device to another.

On the market, various data storage devices exist that enable mobile storing of digital data, i.e. saving data to a location or device which can be moved easily from one location to another. Thereby, while moving the data saved on the data storage device, no connection between the data manipulation device and the data storage device is necessary. These mobile data storage devices have many advantages for the user. E.g., they enable users to create fast and easy backups of data that has been created on a data manipulation device. Also, they provide an easy way of copying and transferring digital data from one data manipulation device to another data manipulation device. Further, they also provide a way to keep data manipulation and data storage separated, which is important also as a factor to save costs as a pure data storage device usually costs only a fraction of a data manipulation device.

At present, there are mainly two technical solutions commonly used that enable the mobile storage of data. On the one hand, there are mobile hard disks or flash memory sticks, which can be connected to a data manipulation device through a hardware interface like a universal serial bus (USB) port, thus enabling the transfer of digital data or files to the data storage device. For the user, this means both an easy as well as secure solution, as establishing the connection is both simple and safe. Also, if the mobile data storage device is connected to a data manipulation device that comprises a graphical user interface on a screen, the mobile data storage device will be displayed in a similar way as an internal storage such as a hard disk, on which data can be manipulated in the usual way such as saved, deleted, moved, edited and copied. A drawback of this solution is that data can only be manipulated on the mobile data storage device when there is a direct hardware connection. If the user wants to use the data on different devices, then this is not possible at the same time but has to be done one after the other. Also, the data is not available if the data storage device is not connected to the data manipulation device. If the user is at a location out of physical reach of the mobile data storage device, no access to the data stored thereon is possible. Another problem is the losing of the mobile data storage device, which would not only include losing the data on it but also making them accessible to potentially unauthorised persons in the worst case.

The other mentioned technical solution are data saving systems that enable the saving of data via a network connection such as, e.g., a transmission control protocol / internet protocol (TCP/IP) connection on centralized data saving devices, i.e. servers or clouds. The advantage of the network solution is mainly the possibility of manipulating data independent of a singular physical data saving device. Instead, the manipulation can be done from any data manipulation device such as, e.g., a computer or a mobile smartphone that has a network connection. Also, this enables the access to data from multiple, different devices at different locations at a time. Further, the data is safe as it is located on servers that can make access for unauthorised persons comparably difficult. The probability of the data getting lost is also rather low as there usually are backup copies of the data saved on a server or cloud. A drawback of these network solutions is the fact that they are more complex to use and that they also require a setup process. The use of hardware mobile data storage devices is possible almost immediately simply by connecting them to a data manipulation device or data handling device. Opposed to this, network based solutions require some form of setup process. This can be a barrier especially for users without technical expertise. Also, every network based solution is depending on a network connection. If there is no network connection, the user does not have access to the data. Another problem is the quality and speed of the network connection, even if it is established. The speed of any network connection usually is generally lower than the speed of a direct hardware connection. And lack of speed can be a problem especially in a work environment focused on efficiency.

Presently, even though the mentioned two solutions (physical storage and network storage) are the solutions commonly in use, in technical literature possible combinations of these two solutions are described. These combinations take the advantages of both solutions to level out the described drawbacks. For example, in a combined solution, a network based access can be offered in a simple way that is also understandable and usable for entry level users without much technical expertise, as they can initiate usage with a physical device which they might be more accustomed to. All described solutions target at making saving and accessing data easier and more flexible.

US 2005/0216639 A1 describes a solution that enables synchronising data saved onto a physical mobile data storage device such as, e.g., a USB stick directly with a network storage location such as, e.g., a server. A software installed on the mobile data storage device ensures that synchronisation takes place regularly. On the network side, access to the data is secured through user authentication. Further, in WO 2007/105316 A1, a similar solution is described. This solution targets at the user needs described above, for example ensuring easy and safe access to data regardless of the user's location.

A drawback of all solutions mentioned above is related to the fact that besides easy and quick access of data, finding and managing data is becoming more relevant as the amount of data which a user is creating is growing over time. Further, the amount of data storable on data storages and particularly on mobile data storage devices is constantly growing which also increases the relevance of finding and managing data also for mobile data storage devices. Thus, the usage of data storage solutions is more and more closely connected to the user's ability to manage, search and find data. And this is becoming even more important when data is saved on different devices and locations. However, present solutions do not satisfyingly consider these problems.

Therefore, there is a need for mobile data storage allowing a comparably easy operation and a convenient data management particularly for finding data.

### Disclosure of the Invention

According to the invention a mobile data storage device is provided as it is defined by the features of independent claim 1 and a data management service is provided as it is defined by the features of independent claim 13. Preferred embodiments are subject of the dependent claims.

The invention is based on the following: A mobile data storage device comprises a processor, an interface unit, a digital memory, a position detecting unit for detecting a position of the mobile data storage device and a data management module for managing data of the digital memory. In particular, the data management module is arranged to assign an attribute comprising the current position detected by the position detecting unit to the data when storing the data in the digital memory.

The mobile data storage device can be a mobile phone, a smartphone, a mobile hard disk drive or the like and in particular a universal serial bus (USB) stick. The processor allows for running various processes on the mobile storage device such as system programs, utility programs, services and the like and it can be a central processing unit (CPU). The interface unit can comprise a hardware interface or hardware computer bus by which the mobile data storage device is connectable to a data handling device or data manipulations device such as a personal or workstation computer, a laptop computer, a digital camera, a media player, a television set, a gaming console or the like. Thereby, the hardware interface can be a standard serial bus interface such as, e.g., a USB interface or an interface according to the standards no. 1394 of the institute of electrical and electronics engineers (IEEE) also known in the art by the brand names FireWire, i.LINK or Lynx. The hardware interface can also be an internal bus particularly if the mobile data storage device is integrated into the data handling device or a device-to-device air interface such as a radio based communication link for example using an open wireless technology standard as known in the art by the brand name Bluetooth. Position in the context of the invention relates to a location or geographic place where the mobile data storage device is located. The data can be all kind of data storable on the mobile data storage device and in particular files, folders and the like. Managing data in this context relates to data manipulation procedures such as, e.g., saving, adding, changing, deleting and the like. The attribute or tag can be saved as metadata of the data. The data management module can particularly be implemented as a computer program or service being executed on the mobile data storage device by means of the processor. Storing data in the digital memory in this context relates to all processes performed inducing saving of the data such as, e.g., creating, altering, renaming the data or the like.

According to the invention, finding and managing data stored by the mobile data storage device can be improved by taking into account the position within the attribute assigned to the data. Thus, by adding the additional attributes or tags comprising the geographical position to the data or to every file that is created, saved or manipulated by the mobile data storage device the data can be conveniently managed and found. For example, business related data or files are more likely to be found in an office location simply by applying a geographical filter. Such a geographical filter can reduce the results to data or files that incorporate a specific geographical position attribute or range thereof that is close to the location of the office. Thus, the user has the possibility to search by geographical location. In combination, filtering by other known attributes such as file name and the like as well as by geographical location can add up to a efficient search tool. For example, this advantage can be realized through a graphical user interface (GUI) that also enables the user to use a map as a search tool next to a conventional folder structure as it is being used in present day operating systems.

Preferably, the data comprises a computer file and the data management module is arranged to assign the attribute to the computer file when storing the computer file in the digital memory. Computer file in this context relates to a block of arbitrary information, or resource for storing information, which is available on a computer particularly to a computer program. Such a computer file usually is durable in the sense that it remains available for programs to use after the current program has finished. Such arrangement of the mobile data storage device can allow for an efficient management of computer files as a very common type of data generated and altered by the user.

Preferably, the position detecting unit comprises a global positioning unit for receiving data from a global position system. In this context, global position system relates to a space based global navigation satellite system that usually provides reliable location and time information in all weather and at all times. Typically, it can be accessed anywhere on or near the Earth when and where there is an unobstructed line of sight to three, four or more satellites. Such global position systems are known in the art, e.g., as the global positioning system (GPS) maintained by the United States government being freely accessible by anyone with an according GPS receiver, as the Russian global navigation satellite system (GLONASS) which is mainly for use by the Russian military, as the planned Chinese compass navigation system or as the positioning system of the European Union (Galileo). By means of such a position detecting unit the geographic position or location of the mobile data storage device can precisely and ongoingly be detected when being connected to the global positioning system and in particular its satellites via the global positioning unit. Thereby, the geographic position can be defined by latitude, longitude and altitude.

Preferably, the position detecting unit comprises a radio unit for connecting to a radio network. Radio network in this context relates to networks in which communication is based on the transmission of signals by modulation of electromagnetic waves with frequencies below those of visible light. In particular, it relates to locally available networks such as wireless local area networks (WLAN) and to mobile networks such as general packet radio service (GPRS) networks, universal mobile telecommunications system (UMTS) networks or high-speed downlink packet access (HSDPA) networks. With such a position detecting unit the geographic position of the mobile data storage device can ongoingly be detected by evaluating position relevant data of the radio network received via the radio unit such as the cell info, the internet protocol (IP) address or the like. If the position detecting unit of the mobile data storage device comprises the global positioning unit as well as the radio unit, it can in each situation evaluate the precisest available position of the mobile data storage device. This also allows for detecting the position even if either no global positioning system signal but a radio network signal is available or vice versa.

Preferably, the mobile data storage device has a time detecting unit wherein the data management module is arranged to assign the attribute further comprising the current time detected by the time detecting unit to the data while storing the data in the digital memory. Thereby, current time can relate to the time of performing storage of the data in the digital memory. The time detecting unit can particularly comprise a clock. Thus, the attributes of the data or files are not only comprising a geographical position such as, e.g., the place where data or a file was created or altered but also time such as, e.g., the date when data or a file was created or altered. This enables the user to find data or files through a combined search of time and place.

Preferably, the mobile data storage device comprises a synchronization module being arranged to establish a connection to a server having a data storage and to synchronize the digital memory with the data storage of the server. Thereby, the synchronization module of the mobile data storage device preferably is arranged to monitor connectability to a network via the interface unit, to monitor availability of the server while a connection to the network is established and to connect to the server when the server is available. In this context, the server can be a server computer running services for establishing communication with client computers or devices such as the mobile storage device. It can particularly be a network server computer or cloud providing communication over a network such as a local area network (LAN), a wireless local area network (WLAN), a wide area network (WAN) such as the internet or combinations thereof. Further, the server computer can run services for providing a location for shared disk access, i.e. a shared storage of computer files, or access to a central database management system (DBMS). Synchronizing the digital memory with the data storage of the server can comprise comparing the data stored in the digital memory with data stored on the data storage of the server and initiate a replication if necessary, e.g., if a difference between the data stored on the digital memory and the data stored on the data storage of the server is detected. The synchronization module can particularly be implemented as a computer program or service being executed on the mobile data storage device by means of the processor.

Such a mobile data storage device with a synchronization module allows to conveniently synchronize data, e.g., with the server computer over the internet. Particularly, when being implemented as a USB stick or the like, the solutions of the prior art only allow synchronising stored data when there is a hardware connection between the data saving device and a data manipulation device or data handling device, i.e., e.g., the USB stick is plugged in the data manipulation device. In addition thereto, the data manipulation device needs to have a network connection and a connection being established. If one of these conditions is not fulfilled, synchronisation cannot take place. This means in consequence, that often there can be a difference in data or files on the physical mobile data storage device and the server computer if synchronisation fails. If this is the case and the user tries to access these data or files either through the mobile data storage device or through any data manipulation device it might be that either the data or files are not available in their latest version or, in the worst case, that the files are not available at all. Therefore, by means of the synchronization module the mobile storage device can he arranged to connect to a network such as, e.g., the internet such that a network connection can be established independently from the data manipulation device. For example, for allowing establishing a network connection, the interface unit of the mobile data storage device can be accordingly arranged.

Moreover, in this context if the above mentioned synchronisation with a server computer takes place using a network connection established by the data manipulation device, part of the bandwidth available can be used for this process and not being available for other tasks that the user might deem more important in that moment such as, e.g., watching a movie online. This can limit the efficiency of network service and in particular internet services such as World Wide Web (WWW) services. Also, synchronising data usually takes time which results in data or files not being available immediately through the network after being manipulated, saved or newly created. If the synchronization module and eventually the interface unit of the mobile data storage device is arranged to establish an independent connection to a network itself, the synchronisation can take place at a time independent and without negative influence on other network activities of the user. Further, the synchronisation can take place independently from the usage of the data manipulation device or data handling device, i.e., e.g., even if the user is actually moving from one place to another or is busy with other activities and not using any data handling device. Also, as the synchronisation can take place independently from user interactions and time, it can be triggered at times when the network load is at low levels, e.g. at night. This helps network providers to use the network resources better and in a more economic way by active traffic modelling.

Furthermore, such a mobile data storage device can allow providing a network connection and synchronisation of data or files even for data manipulation devices or data handling devices that do not have any network connection such as, e.g., common digital cameras. In this case, the data saving device can physically be connected with the data handling device, transfer the files and establish a network connection through the integrated synchronization module and eventually the interface unit.

Preferably, the mobile data storage device comprises a repository module for providing a file management computer program to a computing device via the interface unit, wherein the repository module is arranged to detect an installed file management computer program on the computing device when a connection between the computing device and the data storage device is established via the interface unit and to initiate an installation of the file management computer program on the computing device if the installed file management computer program is not detected on the computing device. The computing device can particularly be the data handling device or data manipulation device mentioned above, i.e. for example a personal or workstation computer, a laptop computer, a digital camera, a media player, a television set, a gaming console or the like. The repository module can particularly be implemented as a computer program or service being executed on the mobile data storage device by means of the processor. Initiating the installation can comprise evaluating if the computing device has means for providing a graphical user interface (GUI) and an operating system allowing the installation of the file management computer program wherein the operating system can allow the installation only after user approval. By providing the file management computer program to the computing device, the mobile data storage device allows for installing a sophisticated tool on the computing device with which various data can conveniently be managed.

The file management computer program preferably is arranged to manipulate data stored in the digital memory of the mobile data storage device and data stored in the data storage of the server. Manipulation of data or of files in this context relates to common data management functions such as, e.g., saving, adding, changing, renaming and deleting data or files. Thereby, the file management computer program preferably is arranged to sort the data in accordance with the position comprised by the attribute assigned to the data and to provide the sorted data to a graphical user interface for displaying the data. Graphical user interface (GUI) in this context generally relates to a type of user interface that allows users to graphically interact with computer programs or software executed on a computer which often includes offering graphical icons and visual indicators to fully or partially represent the information and actions available to the users. Displaying the sorted data can particularly comprise displaying an interactive map onto which the sorted data is arranged. Thereby, using the attributes or metadata, a user can be provided, e.g., with the map in the GUI in which he can search for data or files by position or location. For example, the user can zoom into a location such as office or home and see all data or files that have been manipulated in that location. If the attributes or metadata of the data or files also comprise time information, it can be provided a possibility to apply an additional time filter to the user. For example, this can be realized as a time axis on which the user can navigate back in time. By applying time and location filters, it is possible that the user finds data or files he is looking for quickly and intuitively.

Preferably, the mobile data storage device comprises a en-/decryption module being arranged to encrypt data being transferred from the mobile data storage device and to decrypt data being transferred to the mobile data storage device. The en-/decryption module can particularly be implemented as a computer program or service being executed on the mobile data storage device by means of the processor. Such an en-/decryption module allows for improved security during data transfer, e.g., via the interface unit by assuring that only authorized persons access the data. Particularly, during automatic data synchronization, for example with the server via the internet, such improved security can be advantageous.

Preferably, the mobile data storage device comprises an energy source for running the mobile data storage device. In particular, the energy source can have a battery. Like this, energy supply of the mobile data storage device can be internally arranged and the mobile data storage device can be run independent of any other devices. In particular, by means of such an energy source it is possible to run the mobile data storage device independent of a connection to a data manipulation device or to an external energy source.

Another aspect of the invention relates to a data management service arranged to be executed on a server computer having a data storage for storing data transferred from a mobile data storage device as described above, comprising a web application module arranged to sort the data in accordance with the position comprised by the attribute assigned to the data by the mobile data storage device and to provide a graphical user interface executable by a browser program wherein the graphical user interface is arranged to display the sorted data. Web application module in this context relates to computer program means delivering content and functionalities, such as web pages, using hypertext transfer protocol (HTTP), over the internet via the World Wide Web (WWW). Such web pages can usually be processed by a browser program or web browser which is a software application executed on a client computing device or data handling device for retrieving, presenting and traversing information resources on the WWW. The data management service when being installed and executed on the server computer can provide data to the GUI that can be invoked by a user on his data handling device or client computing device being connected to the internet. Such a data management service allows the user to get an overview about and to manage the data or files saved on the server computer via the common web browser of its data handling device. In particular, the GUI can give an overview about data of the server computer by using the attributes or metadata that comprises the position or location and eventually also time as described above.

Preferably, the web application module is arranged to sort data of the data storage and of the memory unit of the mobile data storage device in accordance with the position comprised by the attribute assigned to the data. With such a data management service, it is possible that the user accesses either the mobile data storage device or the server computer through one unified GUI that is platform independent for searching or manipulating data as described above with regard to the file management computer program provided by the mobile data storage device.

Preferably, the data management service comprises a server synchronization module being arranged to synchronize the data storage with the digital memory of the mobile data storage device. By means of such a synchronization module data between the mobile data storage device and the server computer can conveniently be synchronized. Particularly, when the mobile data storage device also comprises a synchronization module as described above, a bidirectional synchronization is possible.

Preferably, the data management service comprises a server en-/decryption module being arranged to encrypt data being transferred from the server computer and to decrypt data being transferred to the server computer. Such a data management service allows ensuring that access to the GUI as well as to the information and data or files is only granted to authorised persons.

These and other aspects of the invention will be apparent from and elucidated with reference to the embodiment(s) described hereinafter.

### Brief Description of the Drawings

The mobile data storage device and the data management service according to the invention are described in more detail hereinbelow by way of an exemplary embodiment and with reference to the attached drawings, in which:
Fig. 1 shows a schematic view of an embodiment of the mobile data storage device according to the invention and of an embodiment of the data management service according to the invention installed on a server; and
Fig. 2 shows a schematic view of the mobile data storage device in more detail.

### Mode(s) for Carrying Out the Invention

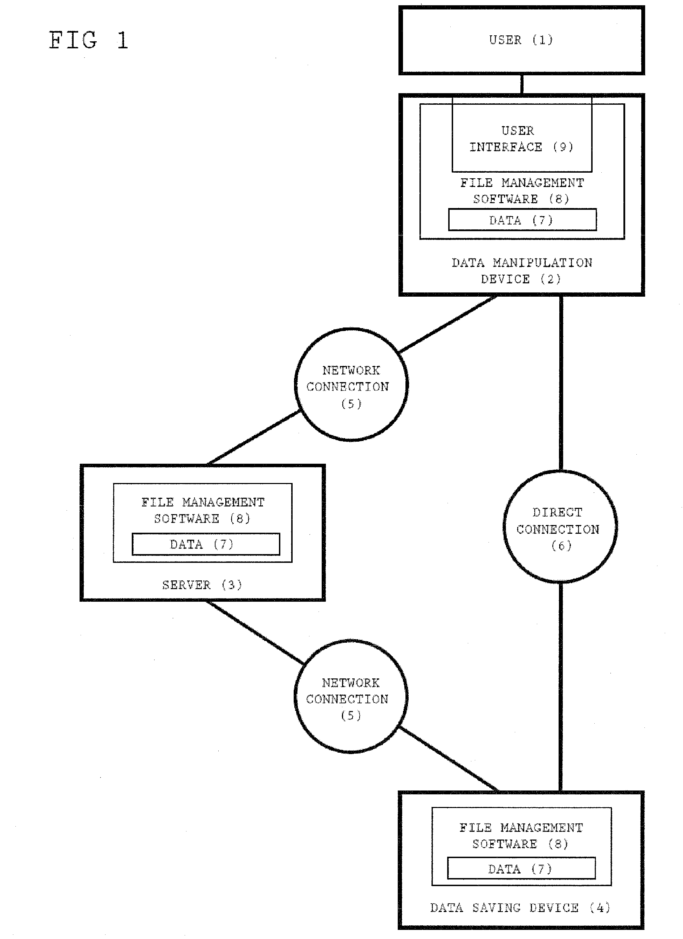

Fig. 1 shows an embodiment of a data saving device 4 as a mobile data storage device according to the invention, a server 3 and a data manipulation device 2. The server 3 is arranged as a server computer running an embodiment of a data management service according to the invention. The server 3 comprises a data storage with data 7 such as files and has a file management software 8 installed and executed. The file management software 8 of the server 3 particularly comprises a web application module for access via the WWW. The data manipulation device 2 such as a personal computer, a laptop computer or the like comprises a data storage with data 7 such as files and has a file management software 8 installed and executed. The file management software 8 of the data manipulation device 2 provides a graphical user interface 9 for interacting with a user 1. In particular the file management software 8 of the data manipulation device 2 can be a browser program or web browser running the client side of a file management web application. Alternatively, it can be a separate computer program or software installed on the data manipulation device 2. The data saving device 3 comprises data 7 such as files and file management software 8 as data management module installed and executed in order to handle the data 7 or files.

The data manipulation device 2 is connected to the data saving device 4 via a direct connection 6 such as a hardware connection like a universal serial bus (USB) connection or the like. Further, the server 3 is connected to the data manipulation device 2 via a network connection 5 and to the data saving device 4 via a network. connection 5. The network connections 5 can particularly be established via a wireless or wired local area network ((W)LAN), a wide area network (WAN) such as the internet, other network connections or combinations thereof.

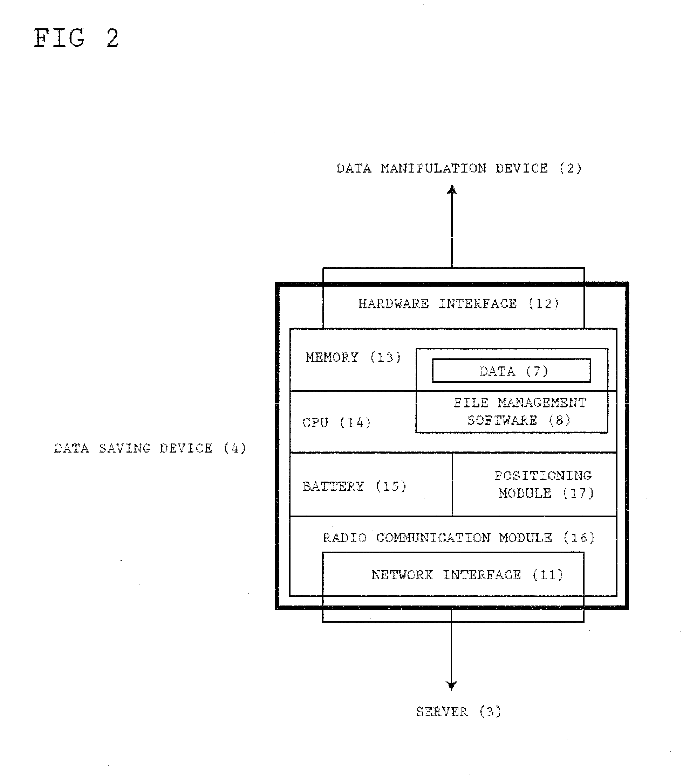

In Fig. 2 the data saving device 4 is shown in more detail. Particularly, it comprises a digital memory 13, a central processing unit 14 (CPU) as processor, a battery 15 as energy source as well as a positioning module 17 with a global positioning unit and a radio unit as position detecting unit. It further comprises an interface unit having a hardware interface 12 such as a USB port, a radio communication module 16 and a network interface 11 such as a WLAN interface. Via the radio communication module 16 and the network interface 11, the data saving device 4 is connectable to the server 3. Further, it is connectable to the data manipulation device 2 via the hardware interface 12. The data 7 is stored in the memory 13 and the file management software 8 is stored in the memory 13 and executed by means of the CPU 14.

In the following examples of operation of various aspects of the invention are described. Thereby, the data saving device is a USB stick 4, the data manipulation device is a computer 2 and the data are files structured in a specific folder structure.

For synchronizing the data 7, the USB stick 4 comprises a synchronization module as well as a synchronization button and the data management service of the server 3 has a server synchronization module. Data synchronization can be triggered by various events comprising the user 1 connecting the USB stick 4 to the computer 2 via its physical USB interface, the user performing data or file actions on the USB stick 4, the user 1 pressing the synchronization button on the USB stick 4 or automatic initiation by the file management software 8 of the USB stick 4 via the network interface 11.

When synchronization is initiated, the USB stick 4 sends its folder structure and authentication information to the server 3. The server 3 checks a synchronization flag in the metadata of the files and folders on both sides. If the synchronization flag is set true, this means the corresponding file needs to be synchronized. In particular, if the synchronization flag is set true on a file or folder on the USB stick 4 and that exact version of the file or folder is not present on the server 3 then the file is uploaded to the server 3. Otherwise no file transfer is performed. If the synchronization flag is set true on a file on the server 3 and that exact version of the file is not present on the USB stick 4 then the file is downloaded to the USB stick 4. Otherwise no file transfer is performed. The folder synchronization flag works recursively, that is, the value of the flag extends to all its files and subfolders except when a file's or subfolder's synchronization flag is modified later in time.

The user 1 can perform various file actions on the USB stick 4: He plugs the USB stick 4 into the computer 2 and performs file actions such as copying, moving, editing, renaming and the like on the USB stick 4 via the user interface 9 of the file management software 8 of the computer 2. This happens in a default file browser of the operating system of the computer 2, a desktop application or the web browser of the computer 2. Performing such file actions sets the synchronization flag on the file or folder to true meaning it is to be synchronized. As soon as synchronization is induced as described above, the according file or folder is synchronized.

Further, the user 1 can delete a file from the USB stick 4. This includes that the user 1 requests deleting the file such as by dragging it to a trash icon displayed in the user interface 9. The file management software 8 asks if the user 1 wants to delete the file only from the USB stick 4 or from the server 3 too. If both from the USB stick 4 and the server 3 then the entry disappears from the file structure and the file is moved to trash in the server 3. If only from the USB stick 4 then a virtual, i.e. a zero bytes long, entry stays on the USB stick 4 indicating that the entry is still available on the server 3.

For desktop application functions or actions, the user 1 can sign up by initiating the installation of file management software 8 when the USB stick 4 is plugged into the computer 2 for the first time. Thereby, the user 1 confirms this installation. Within the file management software 8, the user 1 registers with a new or pending account as described below. For browsing the files 7 in the data storage of the server 3, the user 1 connects and logs in to the server 3 and thereby gets access to the file storage on the server 3 that belongs to the account. The user 1 browses content or files/folders in three different views based on folder structure, geographic tags and time tags. For browsing the files 7 in the memory of the USB stick 4, the user 1 connects to the USB stick 4 via an interface or the hardware interface 12. He then also browses content or files/folders in three different views based on folder structure, geographic tags and time tags.

For performing move or rename file 7 action in the storage of the server 3, the user 1 connects and logs in to the server 3 and gets access to his file storage. Then, the user 1 does a moving or renaming action and when the USB stick 4 requests synchronization the next time, the file or the corresponding virtual entry is moved/renamed on the USB stick 4 as well. For performing a deleting or moving to trash file 7 action in the storage of the server 3, the user again connects and logs in to the server 3 and gets access to his file storage. Then, the user 1 does the deleting action and the according file 7 is moved to trash, i.e. moved to trash folder in the storage of the server 3. When the USB stick 4 requests synchronization the next time, the entry is deleted on the USB stick 4. Further, if the user 1 permanently deletes the file 7 or deletes the file 7 from the trash folder on the server 3, the file is deleted permanently from the server 3. However, if the user 1 performs a "undelete from trash" file action on his storage on the server 3, the file 7 is moved back to its original place in the file system on the server 3 and when the USB stick 4 requests synchronization the next time, the file 7 gets back on the USB stick 4 file system.

For performing an upload file action in the storage of the server 3, the user 1 connects and logs in to the server 3 and gets access to his file storage. Then, the user 1 uploads a file 7 via the file management software 8 of the computer 2. Thereby, the synchronization flag of the file 7 is set true. When the USB stick 4 requests synchronization the next time, the file 7 is downloaded to the USB stick 4 and the synchronization flag is set false. For performing an edit file 7 action in the storage of the server 3, the user 1 connects and logs in to the server 3 and gets access to his file storage. The user then opens a file 7 via the data management software 8 of the computer 2, modifies its content and uploads it back to the server 3. Thereby, the synchronization flag is set true. When the USB stick 4 requests synchronization the next time, the file 7 is downloaded to the USB stick 4 and the synchronization flag is set false.

For opening a file 7 in the storage of the server 3, the user browses the file system on the server 3 as described above. Then he selects the file 7, opens the file with a selected or a default program on the computer 2 and views the file. The user 1 then returns to the file management software 8 of the computer and if the file has been modified then the file management software 8 asks to update the file 7 on the server 3. For opening a file 7 from the USB stick 4, the user 1 browses the file system as described above. Then he selects the file 7, opens the file 7 with a selected or default program and views the file. If the user 1 modifies the file 7 too then the new version is automatically saved back to the USB stick 4.

For defining a new place which is geographical location, e.g., defined by latitude, longitude and altitude that the user 1 has assigned a unique name to such as, e.g., Berlin, Berlin Office, Budapest, University, Home or the like, the user 1 opens a map view of the file management software 8 on the computer 2. He then selects any location on the map view and names the location. For adding files 7 to a user-defined location, the user 1 manipulates a file 7 and the data management software 8 assigns a location to the file's metadata. Files 7 that are inside the given radius circle around a predefined place will then be assigned to that place which has been created by the user 1 before.

For installing the file management software 8 on the computer, the USB stick 4 has a repository module with a non-deletable installer file of the data management software 8. As described above, connecting the USB stick 4 into the computer initiates installation of the file management software on the computer 2.

The file management software 8 application, which can be invoked either from the data manipulation device 2 that has a direct connection to the physical data saving device 4 or from any data manipulation device 2 that has a network connection to the server 3, offers the user 1 three ways of navigating the files: A map view, a calendar view and a files view wherein these three views are displayed in a content pane of the graphical user interface 9. In this context, content pane relates to a section of the graphical user interface 9 in which content is displayed wherein usually graphical user interfaces also comprise other panes such as, e.g., a navigation pane or the like.

In the map view, the user 1 can see data allocated to locations on a map. Thereby, dots represent the locations or places where new files have been added or shared. The size of dots shows how many files are associated to that location or place. With an area and group selecting tool, the user 1 can define named places, which will appear on the sidebar of the map view. Also in the map view, the user can set the date with a slider for additionally filtering the files 7. Further, the user 1 can create own places from the upper menu bar as locations point. In places created by the user 1, right-clicking a file or folder invokes context menu that has an "add to location..." menu point. Here locations are automatically offered based on the distance of the file 7 from the location the user 1 has defined before.

In the calendar view being in the content pane the user 1 can switch between month and week views. Each day has files inside: those files that have the time flag for that day.

In the files view the user 1 can browse a file system in a way that is similar to file management systems of existing operating systems.

With the files and folders 7 the user 1 can in the file management software 8: open (doubleclicking, cmd+down, context menu, menu) save as to the computer 2 (cmd+s, context menu, menu), delete (cmd+backspace, context menu, menu), get information (cmd+i, context menu, menu), perform synchronization (checkbox in context menu, menu), rename (Enter), add files [only for folders] (context menu, menu), show in map view (context menu, menu), show in calendar view (context menu, menu), share... (context menu) and drag files to desktop or other locations as defined by a operating system of the computer 2.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below. Further, if plural alternatives of an embodiment or plural alternatives of a feature are described above or below such alternatives can also be disclaimed from the subject matter of the invention.

The invention also covers all further features shown in the Figs. individually although they may not have been described in the afore or following description. Further, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method. Any reference signs in the claims should not be construed as limiting the scope.

## Claims

1. Mobile data storage device (4) comprising a processor (14), an interface unit (11, 12, 16), a digital memory (13), a position detecting unit (17) for detecting a position of the mobile data storage device (4) and a data management module (8) for managing data (7) of the digital memory (13), **characterized in that** the data management module (8) is arranged to assign an attribute comprising the current position detected by the position detecting unit (17) to the data (7) when storing the data in the digital memory (13).

2. Mobile data storage device (4) according to claim 1, wherein the data (7) comprises a computer file and the data management module (8) is arranged to assign the attribute to the computer file when storing the computer file in the digital memory (13).

3. Mobile data storage device (4) according to claim 1 or 2, wherein the position detecting unit (17) comprises a global positioning unit for receiving data from a global position system.

4. Mobile data storage device (4) according to any one of the preceding claims, wherein the position detecting unit (17) comprises a radio unit for connecting to a radio network.

5. Mobile data storage device (4) according to any one of the preceding claims, having a time detecting unit wherein the data management module (8) is arranged to assign the attribute further comprising the current time detected by the time detecting unit to the data while storing the data in the digital memory.

6. Mobile data storage device (4) according to any one of the preceding claims, comprising a synchronization module being arranged to establish a connection to a server (3) having a data storage and to synchronize the digital memory (13) with the data storage of the server (3).

7. Mobile data storage device (4) according to claim 6, wherein the synchronization module is arranged to monitor connectability to a network via the interface unit (11, 12, 16), to monitor availability of the server (3) while a connection to the network is established and to connect to the server (3) when the server (3) is available.

8. Mobile data storage device (4) according to any one of the preceding claims, comprising a repository module for providing a file management computer program to a computing device (2) via the interface unit (11, 12, 16), wherein the repository module is arranged to detect an installed file management computer program (8) on the computing device (2) when a connection between the computing device (2) and the mobile data storage device (4) is established via the interface unit (11, 12, 16) and to initiate an installation of the file management computer program (8) on the computing device (2) if the installed file management computer program (8) is not detected on the computing device (2).

9. Mobile data storage device (4) according to claim 6 or 7 and to claim 8, wherein the file management computer program (8) is arranged to manipulate data (7) stored in the digital memory (13) of the mobile data storage device (4) and data (7) stored in the data storage of the server (3).

10. Mobile data storage device (4) according to claim 9, wherein the file management computer program (8) is arranged to sort the data (7) in accordance with the position comprised by the attribute assigned to the data (7) and to provide the sorted data to a graphical user interface (9) for displaying the data.

11. Mobile data storage device (4) according to any one of the preceding claims, comprising an en-/decryption module being arranged to encrypt data (7) being transferred from the mobile data storage device (4) and to decrypt data being transferred to the mobile data storage device (4).

12. Mobile data storage device (4) according to any one of the preceding claims, comprising an energy source (15) for running the mobile data storage device (4).

13. Data management service arranged to be executed on a server computer (3) having a data storage for storing data (7) transferred from a mobile data storage device (4) according to any one of the preceding claims, comprising a web application module (8) arranged to sort the data (7) in accordance with the position comprised by the attribute assigned to the data (7) by the mobile data storage device (4) and to provide a graphical user interface (9) executable by a browser program wherein the graphical user interface (9) is arranged to display the sorted data (7).

14. Data management service according to claim 13, wherein the web application module (8) is arranged to sort data of the data storage and of the memory unit (13) of the mobile data storage device (4) in accordance with the position comprised by the attribute assigned to the data (7).

15. Data management service according to claim 13 or 14, comprising a server synchronization module being arranged to synchronize the data storage with the digital memory (13) of the mobile data storage device (4).

16. Data management service according to any one of claims 13 to 15, comprising a server en-/decryption module being arranged to encrypt data being transferred from the server computer (3) and to decrypt data being transferred to the server computer (3).
